# EUROPEAN PATENT SPECIFICATION

(11) **EP 4 470 890 B1**
(45) Date of publication and mention of the grant of the patent: **14.01.2026**
(21) Application number: 24178856.1
(22) Date of filing: 29.05.2024
(51) Int. Cl.: B62H 5/02, B62H 5/06, B62K 11/02, B62K 11/14

(54) **STRADDLED VEHICLE**
GRÄTSCHSITZFAHRZEUG
VÉHICULE À SELLE

(30) Priority: 02.06.2023 JP 2023091609
(43) Date of publication of application: 04.12.2024
(73) Proprietor: Yamaha Hatsudoki Kabushiki Kaisha, Iwata-shi, Shizuoka 438-8501 (JP)
(72) Inventor: Hosoya, Kenji, Shizuoka, 438-8501 (JP)
(74) Representative: Grünecker Patent- und Rechtsanwälte PartG mbB

(56) References cited:
- JP-A- 2007 099 050
- US-A1- 2020 290 702
- US-A1- 2021 377 734

## Description

The present invention relates to a straddled vehicle.

The prior art document JP 2007- 099050 A discloses a straddled vehicle having a head pipe, a front fork and a steering lock. A main frame extends backward from the head pipe. The main frame being bifurcated to left and right with regard to a vehicle left-right direction relative to a left-right center line from the head pipe to a main frame maximum width position. The main frame maximum width position is a position where a width of an upper surface of the main frame in the vehicle left-right direction reaches its maximum. The left-right center line extending in a vehicle forward-backward direction while passing through the head pipe. A power source housing part is at least partially located farther in upward direction with regard to a vehicle up-down direction than the main frame. The power source housing part being supported by the main frame. A receiver control unit is configured to receive a signal from a smart key. The steering lock can be released by a release signal from the control unit. The receiver control unit is mounted on the vehicle and disposed within a cowl and overlapping the front fork in side view.

A smart key system is known as means for making a main switch of a straddled vehicle manipulatable. A straddled vehicle equipped with the smart key system is disclosed in JP 2020- 055 379 A, for example. In the straddled vehicle according to JP 2020- 055 379 A, electrical equipment included in the smart key system is electrically connected to a smart lock system used for a steering lock. If a smart key that a driver is carrying is authenticated, a handle is locked or unlocked. The electrical equipment is disposed forward of a head pipe, and is housed in a front cowl.

In a case of a straddled vehicle equipped with a smart key system, the straddled vehicle is required to have a receiver control unit for receiving a signal transmitted from a smart key that a driver is carrying. The receiver control unit, whose communication range is limited to some extent, is desirably located so as to be capable of easy communication with the smart key.

The straddled vehicle, on the other hand, is a vehicle configured to turn by the driver's manipulating a handle and driver's shifting his/her weight, and therefore the straddled vehicle is required to have a high responsiveness to the driver's manipulation intention. For the straddled vehicle, the agility, lightness, and convenience of the vehicle are important factors. Thus, the straddled vehicle is desired to be small and lightweight, with just a little space left for arranging members. The receiver control unit, which has a certain size, is desirably disposed with efficient use of a space.

It is the object of the present invention to provide a straddled vehicle capable of offering an increased communicability with a smart key while allowing an efficient use of a space.

According to the present invention said object is solved by a straddled vehicle having the features of independent claim 1. Preferred embodiments are laid down in the dependent claims.

Accordingly, the present teaching referrers to the communicability of a smart key system. A straddled vehicle is longest in its forward-backward length. In terms of the communicability of a smart key system, it is conceivable that a receiver control unit is disposed at the center of the straddled vehicle with respect to the forward-backward direction. Generally, the center of a straddled vehicle locates near the front end of a driver seat, and a center portion of the straddled vehicle is configured to have a small width in the left-right direction from the viewpoint of ease of footing. If the receiver control unit is disposed on the left or right side of such a constricted portion, the width in the left-right direction is increased, resulting in a reduction of the ease of footing.

To improve this, it is conceivable that the receiver control unit is disposed at the center of the constricted portion with respect to the left-right direction, that is, inside the vehicle. This reduces the communicability, because vehicle components such as a frame and the like intervene between the receiver control unit and a smart key, which is outside the vehicle. Since the constricted portion has a small width in the left-right direction, an in-vehicle space in the constricted portion is small, and therefore arranging the receiver control unit therein is difficult.
the present teaching also referrers to a situation when a driver starts a straddled vehicle equipped with a smart key system. To start the straddled vehicle in a stopped state, the driver manipulates a main switch, to start a motor such as an engine. It therefore would be quite likely that the driver approaching the vehicle in order to ride on the straddled vehicle is coming toward the main switch. Generally in a straddled vehicle, a main switch is disposed in a front portion of the vehicle. Accordingly, the present teaching considers that arranging the receiver control unit in the front portion of the straddled vehicle can offer an increased communicability with the smart key.

Moreover, the present teaching also referrers to arranging the receiver control unit with efficient use of a space. As a place for arrangement of the receiver control unit in the front portion of the straddled vehicle, the inside of a front cowl, which locates forward of a head pipe as disclosed in JP 2020- 055 379 A, can be mentioned, for example. The front cowl, however, is a movable part that moves in conjunction with steering, which means that the position of the receiver control unit changes along with steering. The main switch is, generally, disposed backward of the head pipe, and thus its position is not changed by steering. In the configuration of JP 2020- 055 379 A, therefore, a receiver control unit, which is movable, is connected to the main switch, which is immovable, with an electric cable. To reduce a burden on the electric cable, it is desirable that both the receiver control unit and the main switch are disposed in places that do not displace relative to each other.

Accordingly, the present teaching noticed a main frame, which is bifurcated and extends backward from a head pipe. The present teaching can offering an increased communicability with the smart key while effectively using a region surrounding the main frame as a space for arrangement of the receiver control unit. The present teaching consequently has conceived of the teaching of the present application as follows.
(1) A straddled vehicle of the present teaching includes: a head pipe; a main frame that extends backward from the head pipe in a top view, the main frame being bifurcated to left and right relative to a left-right center line, the left-right center line extending in forward-backward direction while passing through the head pipe; a power source housing part that is at least partially located farther in upward direction than the main frame, the power source housing part being supported by the main frame; a main switch that is disposed farther in backward direction than the head pipe, and farther in forward direction than a main frame maximum width position, the main frame maximum width position being a position where a width of an upper surface of the main frame in left-right direction reaches its maximum; and a receiver control unit configured to receive a signal from a smart key, and to enable the main switch to operate based on the received signal. The receiver control unit is disposed adjacent to a portion of the main frame, the portion ranging from the head pipe to the main frame maximum width position, the main frame being configured to be bifurcated and extend obliquely backward from the head pipe to the main frame maximum width position in a top view, to support a left portion and a right portion of the power source housing part.

In the foregoing straddled vehicle, the receiver control unit is, together with the main switch, disposed in a region ranging from the head pipe to the main frame maximum width position. The distance between the receiver control unit and the main switch is small. In addition, the receiver control unit is disposed adjacent to the main frame, which is bifurcated to left and right. This makes the receiver control unit close to a smart key of a driver, when the driver is approaching the vehicle while aiming at the main switch, so that the communicability of the receiver control unit with the smart key is improved. The portion of the main frame ranging from the head pipe to the main frame maximum width position is located farther in forward direction than the driver's foot. Therefore, even though the receiver control unit is disposed adjacent to this portion, the ease of footing is not reduced. Furthermore, the positions of both the receiver control unit and the main switch are not changed by steering. Thus, an electric cable connecting the receiver control unit to the main switch is less susceptible to a burden caused by steering. Accordingly, the foregoing straddled vehicle can offer an increased communicability with the smart key while allowing an efficient use of a space.

(2) In the straddled vehicle according to (1) above, the main frame may be formed of a plate member. The receiver control unit may be disposed adjacent to the main frame such that at least a part of the receiver control unit is located farther in outward direction than the portion of the main frame ranging from the head pipe to the main frame maximum width position, and overlaps the main frame in a side view.

The main frame is, generally, made of a metal. In a configuration having the main frame formed of a plate member, the main frame intervenes between the receiver control unit and the smart key if the receiver control unit is located farther in inward direction than the main frame. This makes a signal from the smart key less easily reach the receiver control unit, resulting in a reduced communicability. In the straddled vehicle according to (2) above, the receiver control unit is located farther in outward direction than the main frame, and therefore the main frame does not intervene between the receiver control unit and the smart key. Accordingly, the foregoing straddled vehicle can offer an increased communicability with the smart key while allowing an efficient use of a space, even if the main frame is formed of a plate member.

(3) In the straddled vehicle according to (1) or (2) above, the power source housing part may be configured such that in a top view, its width in left-right direction increases from its front end toward a power source housing part maximum width position, and decreases from the power source housing part maximum width position toward its back end. The receiver control unit may be disposed so as to be adjacent to the portion of the main frame ranging from the head pipe to the main frame maximum width position, and so as to be located farther in forward direction than the power source housing part maximum width position.

In the straddled vehicle, a portion of the power source housing part more backward than its maximum width position is, generally, a portion that the driver sandwiches with his/her legs in order to keep balance. In the straddled vehicle according to (3) above, the receiver control unit, which is adjacent to the main frame, is disposed farther in forward direction than the power source housing part maximum width position. This makes it possible that the portion of the power source housing part more backward than its maximum width position has a narrow width in left-right direction. Since the receiver control unit is not disposed in a portion backward the maximum width position in the power source housing portion, the portion backward the maximum width position in the power source housing portion is less likely to have a left-right asymmetrical shape. Accordingly, the foregoing straddled vehicle can offer an increased communicability with the smart key while allowing an efficient use of a space, and also can facilitate the driver in keeping balance.

(4) In the straddled vehicle according to (1) to (3) above, the main frame may include a left main frame and a right main frame, the left main frame being bifurcated from the head pipe toward left relative to the left-right center line, the right main frame being bifurcated from the head pipe toward right relative to the left-right center line. The receiver control unit may be disposed so as to be adjacent to a portion of the left main frame, the portion ranging from the head pipe to the main frame maximum width position.

In a straddled vehicle, a side stand is often used when parking. At that time, in most cases, the straddled vehicle is parked while leaning left. This is why a driver almost always rides on the straddled vehicle from the left side, and therefore a driver who is intending to ride on a straddled vehicle approaches the straddled vehicle from the left side. In the straddled vehicle according to (4) above, the receiver control unit is disposed so as to be adjacent to the left main frame. Accordingly, the foregoing straddled vehicle can offer a further increased communicability with the smart key while allowing an efficient use of a space.

(5) In the straddled vehicle according to (1) to (4) above, the receiver control unit may include an insertion slot for receiving insertion of an electric cable, the electric cable being connected to the main switch. The receiver control unit may be disposed such that the insertion slot is directed upward or downward, and such that the receiver control unit is adjacent to the portion of the main frame ranging from the head pipe to the main frame maximum width position.

In the phase of assembling the straddled vehicle, a wider space is likely to occur in regions above and below the portion of the main frame ranging from the head pipe to the main frame maximum width position, as compared to regions in other directions. Accordingly, the straddled vehicle according to (5) above can offer a further increased communicability with the smart key while allowing an efficient use of a space, and furthermore can improve the ease of assembling.

(6) In the straddled vehicle according to (1) to (5) above, the receiver control unit may have a rectangular parallelepiped shape. The receiver control unit may be disposed such that one of its surfaces having a maximum area is directed the main frame, and such that the receiver control unit is adjacent to the portion of the main frame ranging from the head pipe to the main frame maximum width position.

It is demanded that the straddled vehicle be small in size. If the receiver control unit is arranged such that one of its surfaces having the maximum area is directed in up-down direction for example, the receiver control unit protrudes from the main frame by a large protruding amount. In this respect, the straddled vehicle according to (6) above has the receiver control unit arranged in such a manner that the amount of its protrusion from the main frame is suppressed. Accordingly, the foregoing straddled vehicle can offer a further increased communicability with the smart key while allowing an efficient use of a space, and furthermore can suppress a size increase of the straddled vehicle.

Explanations of configurations, terms, and the like, of the present teaching will be given below.

The "straddled vehicle" is transport equipment, for example. The straddled vehicle is a vehicle driven by human, for example. The straddled vehicle is a vehicle of a type in which a driver sits straddling a seat, for example. In the straddled vehicle, for example, the sitting driver has his/her left leg positioned to left relative to the center in left-right direction of the straddled vehicle, and his/her right leg positioned to right relative to the center in left-right direction of the straddled vehicle. The straddled vehicle is a motorcycle, for example. The straddled vehicle is not limited to the motorcycle, and may be a motor tricycle, for example. The straddled vehicle has two or three wheels, for example. The straddled vehicle has at least one front wheel and at least one rear wheel, for example. The type of the straddled vehicle is not particularly limited, and examples thereof include a moped type, an off-road type, and an on-road type. The straddled vehicle may have a cabin. The straddled vehicle is an engine vehicle that travels only with power generated by an engine, for example. The straddled vehicle may be a hybrid vehicle equipped with an engine and an electric motor, for example. The straddled vehicle may be an electric vehicle that travels only with power generated by an electric motor, for example.

The "main frame" is a part of a frame that constitutes a vehicle body, for example. The main frame is made of a metal, for example. The main frame is formed of a plate member, for example. The main frame may be formed of a pipe, for example. The main frame is connected to the head pipe, for example. The main frame extends in forward-backward direction of the straddled vehicle in a top view, for example. The main frame may extend backward from the head pipe in the vehicle forward-backward direction. The main frame may either extend obliquely or be curved in left-right direction, in forward-backward direction, and in up-down direction, for example. Just required is that the main frame, as a whole, extend in forward-backward direction in a top view, for example. The main frame is configured such that its length in forward-backward direction is larger than its length in left-right direction and its length in up-down direction, for example.

The main frame is bifurcated and extends backward from the head pipe, for example. The main frame includes the left main frame located left relative to the left-right center line, and the right main frame located right relative to the left-right center line, for example. The left-right center line is an imaginary line passing through the center of the upper end of the head pipe in a top view, for example. The left frame, in a top view, extends obliquely backward left, from the head pipe to the main frame maximum width position, for example. The right frame, in a top view, extends obliquely backward right, from the head pipe to the main frame maximum width position, for example.

The main frame is configured such that in a top view, its width in left-right direction increases from its front end toward the main frame maximum width position, for example. The main frame is configured such that in a top view, its width in left-right direction decreases from the main frame maximum width position toward its back end, for example. Here, it may be acceptable that the main frame is configured such that in a top view, its width in left-right direction is constant or substantially constant from the main frame maximum width position to its back end, for example. In such a configuration, the main frame maximum width position is defined as the position of the front end of a section where the width of the main frame in left-right direction is maximum, for example. That is, the main frame maximum width position is defined as a boundary between a first half portion in which the width in left-right direction increases and a second half portion in which the width in left-right direction is constant or decreases, for example.

In a case of the main frame being formed of a plate member, the main frame has a U-shaped cross-section, for example. The main frame at least includes an upper surface, a side surface, and a lower surface, for example. The upper surface is located upper than the lower surface, for example. The side surface connects the upper surface to the lower surface, for example. The side surface connects an outer edge of the upper surface to an outer edge of the lower surface, for example. The side surface is larger in area than the upper surface and the lower surface, for example. In this configuration, the main frame maximum width position is defined as a position where the width in left-right direction between the outer edge of the upper surface of a left-bifurcated portion (corresponding to the left main frame) of the main frame and the outer edge of the upper surface of a right-bifurcated portion (corresponding to the right main frame) of the main frame reaches its maximum, for example.

A straddled vehicle having a vehicle body formed of plural pipes may sometimes include plural pipes extending backward from a head pipe. A main frame refers to the uppermost one of the plural pipes, for example. In a case of the main frame being formed of a pipe, an upper surface of the main frame is defined as a surface that is defined by the main frame in a top view, for example. In this case, a main frame maximum width position is defined as a position where the distance in left-right direction between the outer edge of the upper surface of a left-bifurcated portion (corresponding to the left main frame) of the main frame and the outer edge of the upper surface of a right-bifurcated portion (corresponding to the right main frame) of the main frame reaches its maximum, for example. Here, the main frame maximum width position may be defined as a position where the width of the main frame in left-right direction reaches its maximum when viewed in the direction of the central axis of the head pipe.

The main frame may include a main frame body portion and a motor support portion, the main frame body portion extending in forward-backward direction in a top view, the motor support portion supporting a motor, for example. The main frame body portion is configured such that its length in forward-backward direction is larger than its lengths in left-right direction and in up-down direction, for example. The main frame body portion has a belt-like shape in a side view, for example. The length of the main frame body portion in up-down direction is equal to or less than the length of the head pipe in up-down direction, for example. The motor support portion protrudes downward from a lower surface of the main frame body portion, for example. The definition of the main frame maximum width position excludes the motor support portion, for example. The "main frame" as used herein means the main frame body portion, for example.

The main frame is, for example, disposed such that at least a part of the main frame is located farther in upward direction than the motor. The motor is, for example, an engine, and/ or an electric motor. The main frame supports the motor, for example. The main frame is disposed such that at least a part of the main frame is located farther in downward direction than the power source housing part, for example. The main frame supports a power source housing part, for example. Disposed backward of the main frame is, for example, a seat frame for supporting a seat on which the driver sits. The seat frame is disposed such that at least a part of the seat frame is located farther in backward direction than the main frame, for example.

The "power source housing part" accommodates a power source of the straddled vehicle, for example. The power source housing part is a fuel tank or a battery, for example. The power source is a fossil fuel, electricity, or the like, for example. In a case of the straddled vehicle being an engine-driven vehicle or a hybrid vehicle, the power source housing part includes a fuel tank and a fuel tank covering that covers the fuel tank, for example. The fuel tank is made of a metal, for example. The fuel tank covering is made of a resin, for example. The power source housing part, however, may include a resin-made fuel tank, for example. In this case, the power source housing part is not required to include a fuel tank covering, for example. In a case of the straddled vehicle being an electric vehicle, the power source housing part includes a battery, for example. The battery supplies electricity to an electric motor for generating power with which the straddled vehicle travels.

The "main switch" is a switch for turning on or off the straddled vehicle, for example. The main switch may be used to start or stop the motor, for example. The main switch is disposed such that at least a part of the main switch is located farther in forward direction than a seat on which the driver sits, for example. The main switch is disposed such that at least a part of the main switch is located farther in forward direction than the power source housing part, for example. The main switch is disposed such that at least a part of the main switch is located farther in backward direction than the head pipe, for example. The main switch is disposed such that at least a part of the main switch is located farther in upward direction than the main frame, for example. The main switch is disposed such that at least a part of the main switch is located farther in upward direction than the head pipe, for example. The main switch is disposed such that at least a part of the main switch is located farther in upward direction than the receiver control unit, for example. The main switch is disposed such that at least a part of the main switch is visible in a top view, for example. The main switch is disposed so as to intersect the left-right center line in a top view, for example.

The "receiver control unit", for example, cooperates with the smart key, to constitute a smart key system. The receiver control unit is capable of wireless communication with the smart key, for example. The receiver control unit includes a receiver section for receiving a signal that the smart key has transmit, for example. The receiver control unit includes a transmitter section for transmitting a signal that can be received by the smart key, for example. The smart key may transmit a signal by being manipulated by human, or may transmit a signal without human manipulation, for example. The receiver control unit, upon receiving a signal from the smart key, executes an authentication process for authenticating the smart key, for example. The receiver control unit, upon authenticating the smart key, brings the motor into a state of being permitted to start, for example. The motor may be started by a person manipulating an ignition switch, or may be started without human manipulation, for example. The main switch may be in the form of either a button or a physical key. The receiver control unit is connected to at least the main switch by the electric cable, for example. The receiver control unit may be connected to an engine control unit for controlling an engine, and/or a control unit for controlling a lighting device, a buzzer, and the like, for example.

The receiver control unit is disposed such that at least a part of the receiver control unit is located farther in forward direction than the seat, for example. The receiver control unit is disposed such that at least a part of the receiver control unit is located farther in forward direction than the motor, for example. The receiver control unit is disposed so as to be located farther in forward direction than the main frame maximum width position, for example.

The receiver control unit is disposed farther in backward direction than a movable region of a front fork. The receiver control unit is disposed so as to be located farther in backward direction than the head pipe, for example.

The receiver control unit is disposed such that at least a part of the receiver control unit is located farther in outward direction than the main frame with respect to left-right direction, for example. The receiver control unit is disposed such that at least a part of the receiver control unit is located farther in outward direction than the left main frame with respect to left-right direction, for example. The receiver control unit may be disposed such that at least a part of the receiver control unit is located farther in outward direction than the right main frame with respect to left-right direction, for example.

The receiver control unit may be disposed such that at least a part of the receiver control unit is located farther in inward direction than the main frame with respect to left-right direction, for example. The receiver control unit may be disposed such that at least a part of the receiver control unit is located farther in inward direction than the left main frame with respect to left-right direction, for example. The receiver control unit may be disposed such that at least a part of the receiver control unit is located farther in inward direction than the right main frame with respect to left-right direction, for example. In these cases, the straddled vehicle includes a power source housing part made of a resin, for example. The straddled vehicle includes a main frame formed of a pipe, for example. That is, the receiver control unit is disposed such that there is no metal member intervening between at least a part of the receiver control unit and the smart key, for example.

The receiver control unit is disposed such that at least a part of the receiver control unit is located farther in inward direction than both ends of the motor with respect to left-right direction, for example. The receiver control unit is disposed such that at least a part of the receiver control unit is located farther in inward direction than the main frame maximum width position, for example.

The receiver control unit is disposed so as to be located farther in downward direction than a movable region of a steering handle, for example. The receiver control unit is disposed such that at least a part of the receiver control unit is located farther in downward direction than the power source housing part, for example. The receiver control unit is disposed such that at least a part of the receiver control unit is located farther in downward direction than the upper end of a front fork, for example. The receiver control unit is disposed such that at least a part of the receiver control unit is located farther in downward direction than the upper end of the head pipe, for example. The receiver control unit is disposed such that at least a part of the receiver control unit is located farther in downward direction than the upper end of the main switch, for example. The receiver control unit is disposed such that at least a part of the receiver control unit is located farther in downward direction than the upper end of the main frame, for example.

The receiver control unit is disposed such that at least a part of the receiver control unit is located farther in upward direction than a front wheel, for example. The receiver control unit is disposed such that at least a part of the receiver control unit is located farther in upward direction than the lower end of a front fork, for example. The receiver control unit is disposed such that at least a part of the receiver control unit is located farther in upward direction than the lower end of the head pipe, for example. The receiver control unit is disposed such that at least a part of the receiver control unit is located farther in upward direction than the upper end of the motor, for example. The receiver control unit is disposed such that at least a part of the receiver control unit is located farther in upward direction than the lower end of the main frame, for example.

The receiver control unit has a box-like shape, for example. The receiver control unit has a substantially rectangular parallelepiped shape, for example. The receiver control unit is disposed so as to extend along the main frame, for example. The receiver control unit is disposed such that the widest surface thereof extends along the main frame, for example. The receiver control unit is disposed so as to at least partially overlap the main frame in a side view, for example. The receiver control unit may be disposed such that in a side view, the entirety of the receiver control unit overlaps the main frame in a region of the main frame, the region ranging from the head pipe to the main frame maximum width position, for example. The receiver control unit is disposed such that the widest surface thereof is at least partially visible in a side view, for example. The receiver control unit includes a connector to which an electric cable is connected, for example. The receiver control unit is disposed such that the connector is visible in a top view, for example. The receiver control unit may be disposed such that the connector is visible in a bottom view, for example. The receiver control unit is disposed such that the connector is visible in a front view, for example.

The receiver control unit is attached to the main frame. The receiver control unit is accommodated in a holder, for example. The holder is fixed to the frame so that the receiver control unit is attached to the frame, for example. Here, it may be acceptable that the receiver control unit is directly attached to the main frame, for example.

The receiver control unit is disposed such that at least a part of its outer surface is covered by a side cowl in a side view, for example. The receiver control unit is disposed such that at least a part of its front surface is open to the outside in a front view, for example. The receiver control unit may be located farther outward from the plate member of the main frame than the portion of the main frame ranging from the head pipe to the main frame maximum width position. The outward direction may be perpendicular to a surface of the plate member of the main frame opposing the receiver control unit. The outward direction may extend leftward in vehicle left-right direction and forward in vehicle forward-backward direction. The receiver control unit may be either directly attached to the main frame or uses an attachment member like a holder for attaching the receiver control unit to the main frame.

### Advantageous Effects of Invention

The present teaching can provide a straddled vehicle capable of offering an increased communicability with the smart key while allowing an efficient use of a space.

### Brief Description of Drawings

[FIG. 1] FIG. 1(A) is a left side view of a straddled vehicle according to an embodiment, and FIG. 1(B) is a top view showing a vehicle body structure of the straddled vehicle according to the embodiment.
[FIG. 2] FIG. 2 is a left side view of the straddled vehicle according to the embodiment, with a fuel tank covering and exterior parts at the peripheral of the fuel tank covering being removed.
[FIG. 3] FIG. 3 is a perspective view showing a frame and a receiver control unit of the straddled vehicle according to the embodiment.
[FIG. 4] FIG. 4 is a front view of the straddled vehicle according to the embodiment, with the fuel tank covering and exterior parts at the peripheral of the fuel tank covering being removed.
[FIG. 5] FIG. 5 is a diagram showing a vehicle body structure of the straddled vehicle according to the embodiment as viewed in the direction of the central axis of a head pipe.

### Description of Embodiments

In the following, a straddled vehicle according to an embodiment of the present teaching will be described with reference to the drawings. The embodiment described below is just an example. The interpretation of the present teaching should not be limited in any way by the embodiment described below. In the drawings, the reference signs F, B, U, D, L, and R indicate the forward (front), back (rear), up, down, left, and right, respectively.

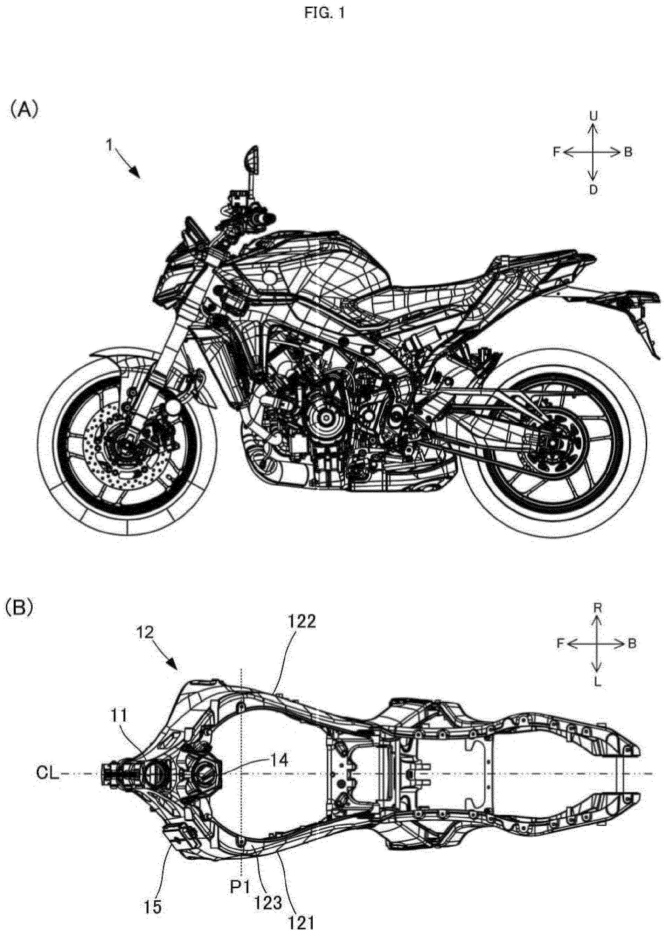

FIG. 1(A) is a left side view of a straddled vehicle according to the embodiment. A straddled vehicle 1 is a motorcycle. The straddled vehicle 1 according to the embodiment is an engine-driven vehicle, which travels only with power generated by an engine.

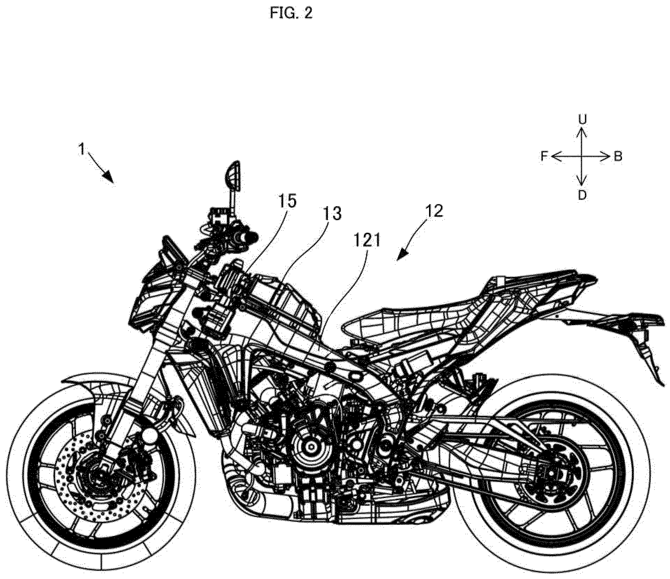

FIG. 1(B) is a top view showing a vehicle body structure of the straddled vehicle according to the embodiment. The straddled vehicle 1 includes a head pipe 11, a main frame 12, a power source housing part 13 (see FIG. 2), a main switch 14, and a receiver control unit 15. The head pipe 11 is disposed in a front portion of the vehicle. The head pipe 11 supports a steering handle such that the steering handle is rotatable clockwise and counterclockwise. The steering handle is connected to a front wheel, which is a steerable wheel, via a front fork.

The main frame 12 extends backward from the head pipe 11 in a top view. Accordingly, the main frame 12 extends backward from the head pipe 11 in the vehicle forward-backward direction. The main frame 12 is bifurcated to left and right relative to a left-right center line CL. The left-right center line CL extends in vehicle forward-backward direction while passing through the head pipe. The main frame 12 is formed of a plate member. The main frame 12 has a plate-like shape whose length in vehicle up-down direction is, in a side view, larger than the length of the receiver control unit 15 in the up-down direction. The main frame 12 includes a left main frame 121 and a right main frame 122, the left main frame 121 being bifurcated from the head pipe 11 toward the left relative to the left-right center line CL, the right main frame 122 being bifurcated from the head pipe 11 toward the right relative to the left-right center line CL.

The main switch 14 is disposed farther in backward direction than the head pipe 11, and farther in forward direction than a main frame maximum width position P1, which is a position where the width of an upper surface 123 of the main frame 12 in vehicle left-right direction reaches its maximum. The main switch 14 is disposed in the middle of the straddled vehicle 1 with respect to the left-right direction. The main switch 14 is disposed so as to be visible by a driver in a top view. As the driver pushes the main switch 14, the straddled vehicle is powered on or off.

FIG. 2 is a left side view of the straddled vehicle according to the embodiment, with a fuel tank covering and exterior parts at the peripheral of the fuel tank covering being removed. The power source housing part 13 is at least partially located farther in upward direction than the main frame 12. In the straddled vehicle 1 according to the embodiment, the power source housing part 13 is a fuel tank for storing gasoline. The power source housing part 13 has its lower portion supported by the main frame 12. The power source housing part 13 has its left portion supported by the left main frame 121, and its right portion supported by the right main frame 122. The power source housing part 13 is configured such that in a top view, its width in the left-right direction increases from its front end toward a power source housing part maximum width position, and decreases from the power source housing part maximum width position toward its back end. The shape of the power source housing part 13 is not particularly limited, however.

The receiver control unit 15 receives a signal from a smart key that the driver is carrying, and enables the main switch 14 to operate based on the received signal. The receiver control unit 15 is disposed adjacent to a portion of the main frame 12, the portion ranging from the head pipe 11 to the main frame maximum width position P1. In this embodiment, the receiver control unit 15 is disposed farther in outward direction than the left main frame 121, and is attached to the left main frame 121. The receiver control unit 15 is located farther outward from the plate member of the main frame 12 than the portion of the main frame 12 ranging from the head pipe 11 to the main frame maximum width position P1. The outward direction is perpendicular to a surface of the plate member of the main frame 12 opposing the receiver control unit 15. The outward direction extends leftward in vehicle left-right direction and forward in vehicle forward-backward direction. The receiver control unit 15 is either directly attached to the main frame 12 or uses an attachment member like a holder for attaching the receiver control unit 15 to the main frame 12.

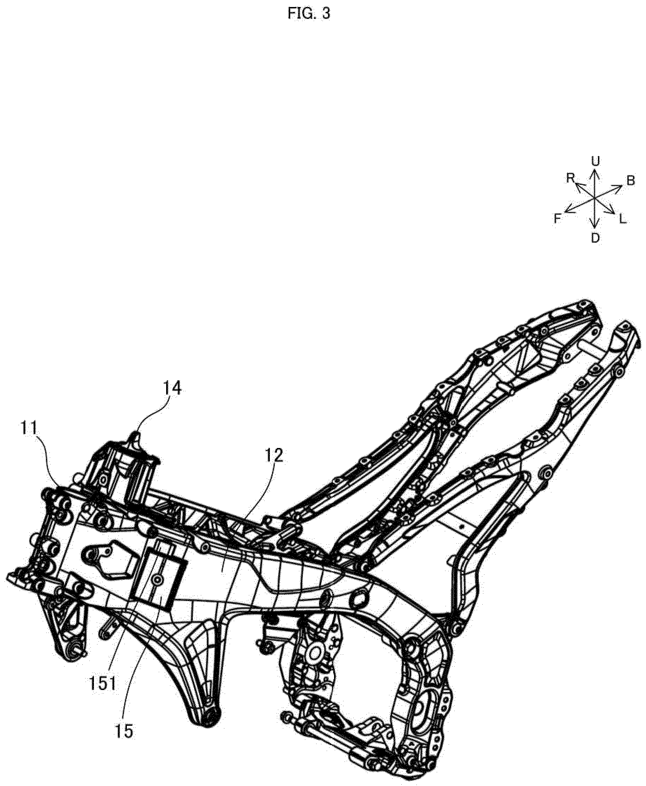

FIG. 3 is a perspective view showing the frame and the receiver control unit of the straddled vehicle according to the embodiment. The receiver control unit 15 includes an insertion slot 151 for receiving insertion of an electric cable, which is connected to the main switch 14. The receiver control unit 15 is disposed such that the insertion slot 151 is directed upward, and such that the receiver control unit 15 is adjacent to the portion of the main frame 12 ranging from the head pipe 11 to the main frame maximum width position P1. Here, it may be acceptable that the insertion slot 151 is directed downward.

The receiver control unit 15 has a substantially rectangular parallelepiped shape. The receiver control unit 15 is disposed such that one of its surfaces having the maximum area is directed the main frame 12, and such that the receiver control unit 15 is adjacent to the portion of the main frame 12 ranging from the head pipe 11 to the main frame maximum width position P1. Here, the shape of the receiver control unit 15 is not particularly limited.

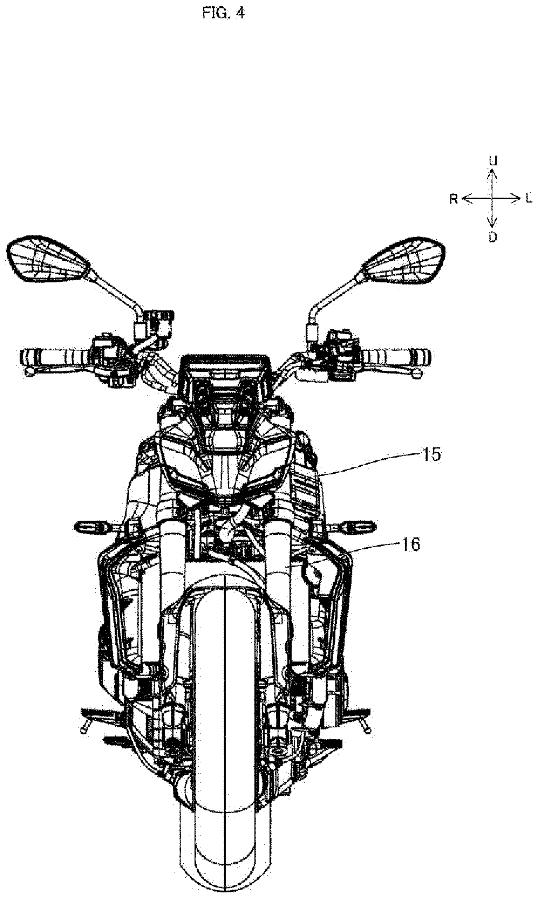

FIG. 4 is a front view of the straddled vehicle according to the embodiment, with the fuel tank covering and exterior parts at the peripheral of the fuel tank covering being removed. The receiver control unit 15 is disposed such that at least a part of the receiver control unit 15 is located farther in leftward direction than a left front fork 16.

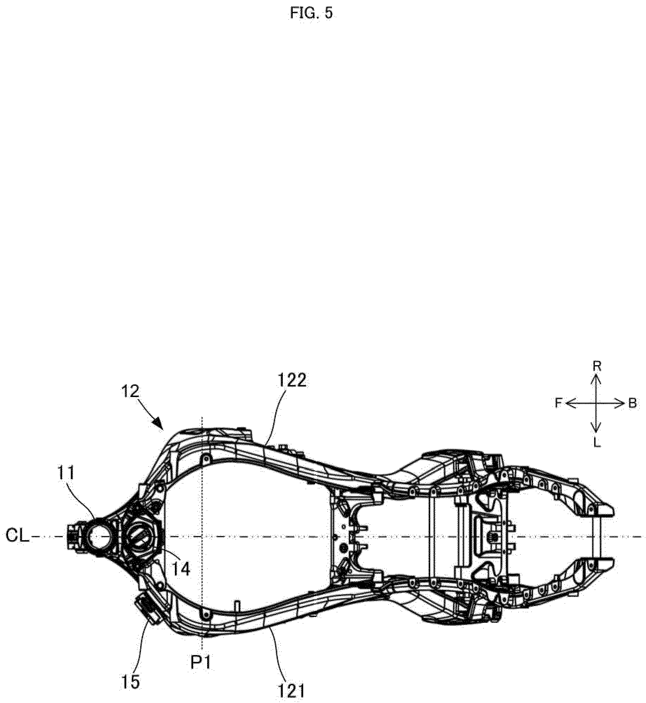

FIG. 5 is a diagram showing a vehicle body structure of the straddled vehicle according to the embodiment as viewed in the direction of the central axis of the head pipe. It may be acceptable that the main frame maximum width position P1 is defined as the position where the width of the main frame 12 in left-right direction reaches its maximum as viewed in the direction of the central axis of the head pipe 11.

### Reference Signs List

- 1 :: straddled vehicle
- 11 :: head pipe
- 12 :: main frame
- 121 :: left main frame
- 122 :: right main frame
- 123 :: upper surface
- 13 :: power source housing part
- 14 :: main switch
- 15 :: receiver control unit
- CL :: left-right center line
- P1 :: main frame maximum width position

## Claims

1. A straddled vehicle (1) comprising:
a head pipe (11);
a front fork;
a main frame (12) that extends backward from the head pipe (11) in a top view, the main frame (12) being bifurcated to left and right with regard to a vehicle left-right direction relative to a left-right center line (CL), the left-right center line (CL) extending in a vehicle forward-backward direction while passing through the head pipe (11);
a power source housing part (13) that is at least partially located farther in upward direction with regard to a vehicle up-down direction than the main frame (12), the power source housing part (13) being supported by the main frame (12);
a main switch (14) that is disposed farther in backward with regard to the vehicle forward-backward direction than the head pipe (11), and farther forward with regard to the vehicle forward-backward direction than a main frame maximum width position (P1), the main frame maximum width position (P1) being a position where a width of an upper surface of the main frame (12) in the vehicle left-right direction reaches its maximum; and
a receiver control unit (15) configured to receive a signal from a smart key, and to enable the main switch (14) to operate based on the received signal,
the receiver control unit (15) is attached to a portion of the main frame (12), the portion ranging from the head pipe (11) to the main frame maximum width position (P1) with regard to the vehicle forward-backward direction and disposed farther backward with regard to the vehicle forward-backward direction than a movable region of the front fork,
the main frame (12) being configured to be bifurcated and extend backward with regard to the vehicle forward-backward direction and obliquely left and right with regard to the vehicle left-right direction from the head pipe (11) to the main frame maximum width position (P1) in the top view, to support a left portion and a right portion of the power source housing part (13).

2. The straddled vehicle (1) according to claim 1, wherein the main frame (12) is formed of a plate member, and
the receiver control unit (15) is disposed adjacent to the main frame (12) such that at least a part of the receiver control unit (15) is located farther in outward direction than the portion of the main frame (12) ranging from the head pipe (11) to the main frame maximum width position (P1) and the receiver control unit (15) overlaps the main frame (12) in a side view.

3. The straddled vehicle (1) according to claim 1 or 2, wherein the power source housing part (13) is configured such that in the top view, a width of the power source housing part (13) in the vehicle left-right direction increases from a front end of the power source housing part (13) toward a power source housing part maximum width position of the power source housing part (13) with regard to the vehicle forward-backward direction, and a width of the power source housing part (13) in the vehicle left-right direction decreases from the power source housing part maximum width position toward a back end of the power source housing part (13) with regard to the vehicle forward-backward direction, and
the receiver control unit (15) is disposed so as to be adjacent to the portion of the main frame (12) ranging from the head pipe (11) to the main frame maximum width position (P1) and so as to be located farther forward with regard to the vehicle forward-backward direction than the power source housing part maximum width position.

4. The straddled vehicle (1) according to any one of claims 1 to 3, wherein the main frame includes a left main frame (121) and a right main frame (122), the left main frame (121) being bifurcated from the head pipe (11) toward left relative to the left-right center line (CL) with regard to the vehicle left-right direction, the right main frame (122) being bifurcated from the head pipe (11) toward right relative to the left-right center line (CL) with regard to the vehicle left-right direction, the receiver control unit (15) is disposed so as to be adjacent to a portion of the left main frame (121), the portion ranging from the head pipe (11) to the main frame maximum width position (P1).

5. The straddled vehicle (1) according to any one of claims 1 to 4, wherein the receiver control unit (15) includes an insertion slot (151) for receiving insertion of an electric cable, the electric cable being connected to the main switch (14), and
the receiver control unit (15) is disposed such that the insertion slot (151) is directed upward or downward with regard to the vehicle up-down direction, and such that the receiver control unit (15) is adjacent to the portion of the main frame (12) ranging from the head pipe (11) to the main frame maximum width position (P1).

6. The straddled vehicle (1) according to any one of claims 1 to 5, wherein the receiver control unit (15) has a rectangular parallelepiped shape, and
the receiver control unit (15) is disposed such that one of its outer surfaces having a maximum area is directed to the main frame (12), and such that the receiver control unit (15) is adjacent to the portion of the main frame (12) ranging from the head pipe (11) to the main frame maximum width position (P1).

7. The straddled vehicle (1) according to any one of claims 1 to 6, wherein the power source housing part (13) is a fuel tank or a battery.

8. The straddled vehicle (1) according to any one of claims 1 to 7, wherein the receiver control unit (15) is disposed such that at least a part of the receiver control unit (15) is located farther in outward direction than the main frame (12) with regard to the vehicle left-right direction.

9. The straddled vehicle (1) according to any one of claims 1 to 7, wherein the receiver control unit (15) is disposed such that at least a part of the receiver control unit (15) is located farther in leftward direction than a left front fork (16).

10. The straddled vehicle (1) according to any one of claims 1 to 8, wherein the receiver control unit (15) is disposed such that at least a part of the receiver control unit (15) is located farther in inward direction than the main frame maximum width position (P1) with regard to the vehicle left-right direction.

## Patentansprüche

1. Ein Spreizsitzfahrzeug (1), das umfasst:
ein Kopfrohr (11);
eine Vordergabel;
einen Hauptrahmen (12), der sich in der Draufsicht vom Kopfrohr (11) nach hinten erstreckt, wobei der Hauptrahmen (12) in Bezug auf eine Fahrzeug-Links-Rechts-Richtung relativ zu einer Links-Rechts-Mittellinie (CL) nach links und rechts gegabelt ist, wobei sich die Links-Rechts-Mittellinie (CL) in einer Fahrzeug-Vorwärts-Rückwärts-Richtung erstreckt, während sie durch das Kopfrohr (11) verläuft;
ein Antriebsquellengehäuseteil (13), das zumindest teilweise in Aufwärtsrichtung in Bezug auf eine Fahrzeug-Auf-Ab-Richtung weiter oben angeordnet ist als der Hauptrahmen (12), wobei das Antriebsquellengehäuseteil (13) vom Hauptrahmen (12) getragen wird;
einen Hauptschalter (14), der in Rückwärtsrichtung in Bezug auf die Fahrzeug-Vorwärts-Rückwärts-Richtung weiter hinten angeordnet ist als das Kopfrohr (11),
und weiter vorne in Bezug auf die Vorwärts-Rückwärts-Richtung des Fahrzeugs als eine Hauptrahmen-Maximalbreitenposition (P1) angeordnet ist, wobei die Hauptrahmen-Maximalbreitenposition (P1) eine Position ist, an der eine Breite einer Oberseite des Hauptrahmens (12) in der Links-Rechts-Richtung des Fahrzeugs ihr Maximum erreicht; und
eine Empfängersteuereinheit (15), die so konfiguriert ist, dass sie ein Signal von einem Smart Key empfängt und den Hauptschalter (14) auf der Grundlage des empfangenen Signals betätigt,
wobei die Empfängersteuereinheit (15) an einem Abschnitt des Hauptrahmens (12) angebracht ist, wobei sich der Abschnitt von dem Kopfrohr (11) bis zur Hauptrahmen-Maximalbreitenposition (P1) in Bezug auf die Vorwärts-Rückwärts-Richtung des Fahrzeugs erstreckt und in Bezug auf die Vorwärts-Rückwärts-Richtung des Fahrzeugs weiter nach hinten angeordnet ist als ein beweglicher Bereich der Vordergabel,
wobei der Hauptrahmen (12) so konfiguriert ist, dass er sich in Bezug auf die Vorwärts-Rückwärts-Richtung des Fahrzeugs nach hinten und in Bezug auf die Links-Rechts-Richtung des Fahrzeugs schräg nach links und rechts vom Kopfrohr (11) bis zur Hauptrahmen-Maximalbreitenposition (P1) in der Draufsicht verzweigt, um einen linken Abschnitt und einen rechten Abschnitt des Kraftquellengehäuseteils (13) zu stützen.

2. Das Spreizsitzfahrzeug (1) gemäß Anspruch 1, wobei der Hauptrahmen (12) aus einem Plattenelement gebildet ist und
die Empfängersteuereinheit (15) benachbart zum Hauptrahmen (12) angeordnet ist, so dass sich zumindest ein Teil der Empfängersteuereinheit (15) weiter in Außenrichtung befindet als der Abschnitt des Hauptrahmens (12), der sich vom Kopfrohr (11) bis zur Hauptrahmen-Maximalbreitenposition (P1) erstreckt, und die Empfängersteuereinheit (15) den Hauptrahmen (12) in einer Seitenansicht überlappt.

3. Das Spreizsitzfahrzeug (1) gemäß Anspruch 1 oder 2, wobei das Antriebsquellengehäuseteil (13) so konfiguriert ist, dass in der Draufsicht die Breite des Antriebsquellengehäuseteils (13) in Fahrzeug-Links-Rechts-Richtung von einem vorderen Ende des Antriebsquellengehäuseteils (13) zu einer maximalen Breitenposition des Antriebsquellengehäuseteils (13) in Bezug auf die Fahrzeug-Vorwärts-Rückwärts-Richtung zunimmt und eine Breite des Antriebsquellengehäuseteils (13) in der Fahrzeug-Links-Rechts-Richtung von der Position der maximalen Breite des Antriebsquellengehäuseteils in Richtung eines hinteren Endes des Antriebsquellengehäuseteils (13) in Bezug auf die Fahrzeug-Vorwärts-Rückwärts-Richtung abnimmt, und
die Empfängersteuereinheit (15) so angeordnet ist, dass sie an den Abschnitt des Hauptrahmens (12) angrenzt, der sich vom Kopfrohr (11) bis zur Hauptrahmen-Maximalbreitenposition (P1) erstreckt, und dass sie in Bezug auf die Vorwärts-Rückwärts-Richtung des Fahrzeugs weiter vorne liegt als die Position der maximalen Breite des Energiequellengehäuseteils.

4. Das Spreizsitzfahrzeug (1) gemäß irgendeinem der Ansprüche 1 bis 3, wobei der Hauptrahmen einen linken Hauptrahmen (121) und einen rechten Hauptrahmen (122) enthält, wobei der linke Hauptrahmen (121) vom Kopfrohr (11) relativ zur Links-Rechts-Mittellinie (CL) in Bezug auf die Fahrzeug-Links-Rechts-Richtung nach links verzweigt ist, wobei der rechte Hauptrahmen (122) vom Kopfrohr (11) relativ zur Links-Rechts-Mittellinie (CL) in Bezug auf die Fahrzeug-Links-Rechts-Richtung nach rechts verzweigt ist, wobei die Empfängersteuereinheit (15) so angeordnet ist, dass sie an einen Abschnitt des linken Hauptrahmens (121) angrenzt, wobei sich der Abschnitt vom Kopfrohr (11) bis zur Hauptrahmen-Maximalbreitenposition erstreckt (P1) erstreckt.

5. Das Spreizsitzfahrzeug (1) gemäß irgendeinem der Ansprüche 1 bis 4, wobei die Empfängersteuereinheit (15) einen Einsteckschlitz (151) zum Einstecken eines elektrischen Kabels enthält, wobei das elektrische Kabel mit dem Hauptschalter (14) verbunden ist, und
die Empfängersteuereinheit (15) so angeordnet ist, dass der Einsteckschlitz (151) in Bezug auf die Fahrzeug-Auf-Ab-Richtung nach oben oder unten gerichtet ist und dass die Empfängersteuereinheit (15) an den Abschnitt des Hauptrahmens (12) angrenzt, der sich vom Kopfrohr (11) bis zur Hauptrahmen-Maximalbreitenposition (P1) erstreckt.

6. Das Spreizsitzfahrzeug (1) gemäß irgendeinem der Ansprüche 1 bis 5, wobei die Empfängersteuereinheit (15) eine rechteckige Parallelepipedform aufweist und
die Empfängersteuereinheit (15) so angeordnet ist, dass eine ihrer Außenflächen mit einer maximalen Fläche zum Hauptrahmen (12) gerichtet ist, und dass die Empfängersteuereinheit (15) an den Abschnitt des Hauptrahmens (12) angrenzt, der sich vom Kopfrohr (11) bis zur Hauptrahmen-Maximalbreitenposition (P1) erstreckt.

7. Das Spreizsitzfahrzeug (1) gemäß irgendeinem der Ansprüche 1 bis 6, wobei das Antriebsquellengehäuseteil (13) ein Kraftstofftank oder eine Batterie ist.

8. Das Spreizsitzfahrzeug (1) gemäß irgendeinem der Ansprüche 1 bis 7, wobei die Empfängersteuereinheit (15) so angeordnet ist, dass sich zumindest ein Teil der Empfängersteuereinheit (15) in Bezug auf das Fahrzeug-Links-Rechts- Richtung weiter in Außenrichtung befindet als der Hauptrahmen (12).

9. Das Spreizsitzfahrzeug (1) gemäß irgendeinem der Ansprüche 1 bis 8, wobei die Empfängersteuereinheit (15) so angeordnet ist, dass sich zumindest ein Teil der Empfängersteuereinheit (15) in Bezug auf das Fahrzeug-Links-Rechts- Richtung weiter außen befindet als die Vordergabel.

10. Das Spreizsitzfahrzeug (1) gemäß irgendeinem der Ansprüche 1 bis 9, wobei die Empfängersteuereinheit (15) so angeordnet ist, dass zumindest ein Teil der Empfängersteuereinheit (15) in Bezug auf die Fahrzeug-Links-Rechts-Richtung weiter in Innenrichtung liegt als die Hauptrahmen-Maximalbreitenposition (P1).

## Revendications

1. Véhicule à selle (1) comprenant :
un tube de direction (11) ;
une fourche avant ;
un cadre principal (12) qui s'étend vers l'arrière à partir du tube de direction (11) dans une vue de dessus, le cadre principal (12) bifurquant vers la gauche et vers la droite par rapport à une direction gauche-droite du véhicule par rapport à une ligne centrale gauche-droite (CL), la ligne centrale gauche-droite (CL) s'étendant dans une direction avant-arrière du véhicule tout en passant par le tube de direction (11) ;
une partie logement de source d'alimentation (13) qui est au moins partiellement située plus haut dans la direction haut-bas du véhicule que le cadre principal (12), la partie logement de source d'alimentation (13) étant supportée par le cadre principal (12) ;
un interrupteur principal (14) qui est disposé plus en arrière par rapport à la direction avant-arrière du véhicule que le tube de direction (11), et plus en avant par rapport à la direction avant-arrière du véhicule qu'une position de largeur maximale du cadre principal (P1), la position de largeur maximale du cadre principal (P1) étant une position où la largeur d'une surface supérieure du cadre principal (12) dans la direction gauche-droite du véhicule atteint son maximum; et
une unité de commande de récepteur (15) configurée pour recevoir un signal provenant d'une « smart key » et pour permettre à l'interrupteur principal (14) de fonctionner sur la base du signal reçu,
l'unité de commande de récepteur (15) étant fixée à une partie du cadre principal (12), la partie s'étendant du tube de direction (11) à la position de largeur maximale du cadre principal (P1) par rapport à la direction avant-arrière du véhicule et étant disposée plus en arrière par rapport à la direction avant-arrière du véhicule qu'une zone mobile de la fourche avant,
le cadre principal (12) pouvant bifurquer et s'étendre vers l'arrière par rapport à la direction avant-arrière du véhicule et obliquement vers la gauche et vers la droite par rapport à la direction gauche-droite du véhicule depuis le tube de direction (11) jusqu'à la position de largeur maximale du cadre principal (P1) dans la vue de dessus, afin de supporter une partie gauche et une partie droite de la partie logement de source d'alimentation (13).

2. Véhicule à selle (1) selon la revendication 1, dans lequel le cadre principal (12) est constitué d'un élément en forme de plaque, et
l'unité de commande du récepteur (15) est disposée à proximité du cadre principal (12) de telle sorte qu'au moins une partie de l'unité de commande du récepteur (15) soit située plus loin vers l'extérieur que la partie du cadre principal (12) s'étendant du tube de direction (11) à la position de largeur maximale du cadre principal (P1) et que l'unité de commande du récepteur (15) recouvre le cadre principal (12) dans une vue latérale.

3. Véhicule à selle (1) selon les revendications 1 ou 2, dans lequel la partie logement de source d'alimentation (13) est configurée de telle sorte que, dans la vue de dessus, la largeur de la partie logement de source d'alimentation (13) dans la direction gauche-droite du véhicule augmente depuis l'extrémité avant de la partie logement de source d'alimentation (13) vers une position de largeur maximale de la partie logement de source d'alimentation (13) par rapport à la direction avant-arrière du véhicule, et la largeur de la partie logement de source d'alimentation (13) dans le sens gauche-droite du véhicule diminue depuis la position de largeur maximale de la partie logement de source d'alimentation vers l'extrémité arrière de la partie logement de source d'alimentation (13) par rapport au sens avant-arrière du véhicule, et
l'unité de commande du récepteur (15) est disposée de manière à être adjacente à la partie du cadre principal (12) s'étendant du tube de direction (11) à la position de largeur maximale du cadre principal (P1) et de manière à être située plus en avant par rapport à la direction avant-arrière du véhicule que la position de largeur maximale de la partie logement de source d'alimentation.

4. Véhicule à selle (1) selon l'une quelconque des revendications 1 à 3, dans lequel le cadre principal comprend un cadre principal gauche (121) et un cadre principal droit (122), le cadre principal gauche (121) étant bifurqué à partir du tube de direction (11) vers la gauche par rapport à la ligne centrale gauche-droite (CL) par rapport à la direction gauche-droite du véhicule, le cadre principal droit (122) bifurquant à partir du tube de direction (11) vers la droite par rapport à la ligne médiane gauche-droite (CL) en ce qui concerne la direction gauche-droite du véhicule, l'unité de commande du récepteur (15) est disposée de manière à être adjacente à une partie du cadre principal gauche (121), la partie s'étendant du tube de direction (11) à la position de largeur maximale du cadre principal (P1).

5. Véhicule à selle (1) selon l'une quelconque des revendications 1 à 4, dans lequel l'unité de commande du récepteur (15) comprend une fente d'insertion (151) pour recevoir l'insertion d'un câble électrique, le câble électrique étant connecté à l'interrupteur principal (14), et
l'unité de commande du récepteur (15) est disposée de telle sorte que la fente d'insertion (151) soit dirigée vers le haut ou vers le bas par rapport à la direction de montée et de descente du véhicule, et de telle sorte que l'unité de commande du récepteur (15) soit adjacente à la partie du cadre principal (12) s'étendant du tube de direction (11) à la position de largeur maximale du cadre principal (P1).

6. Véhicule à selle (1) selon l'une quelconque des revendications 1 à 5, dans lequel l'unité de commande du récepteur (15) a une forme de parallélépipède rectangle, et
l'unité de commande du récepteur (15) est disposée de telle sorte que l'une de ses surfaces extérieures ayant une surface maximale soit dirigée vers le cadre principal (12), et de telle sorte que l'unité de commande du récepteur (15) soit adjacente à la partie du cadre principal (12) s'étendant du tube de direction (11) à la position de largeur maximale du cadre principal (P1).

7. Véhicule à selle (1) selon l'une quelconque des revendications 1 à 6, dans lequel la partie logement de source d'alimentation (13) est un réservoir de carburant ou une batterie.

8. Véhicule à selle (1) selon l'une quelconque des revendications 1 à 7, dans lequel l'unité de commande du récepteur (15) est disposée de telle sorte qu'au moins une partie de l'unité de commande du récepteur (15) soit située plus loin vers l'extérieur que le cadre principal (12) par rapport à la direction gauche-droite du véhicule.

9. Véhicule à selle (1) selon l'une quelconque des revendications 1 à 7, dans lequel l'unité de commande du récepteur (15) est disposée de telle sorte qu'au moins une partie de l'unité de commande du récepteur (15) est située plus loin vers la gauche qu'une fourche avant gauche (16).

10. Véhicule à selle (1) selon l'une quelconque des revendications 1 à 2 p8, J 2 ^{©}r, dans lequel l'unité de commande du récepteur (15) est disposée de telle sorte qu'au moins une partie de l'unité de commande du récepteur (15) soit située plus loin vers l'intérieur que la position de largeur maximale du cadre principal (P1) par rapport à la direction gauche-droite du véhicule.
